# EUROPEAN PATENT APPLICATION

(11) **EP 2 184 215 A1**
(43) Date of publication of application: **12.05.2010**
(21) Application number: 08805398.8
(22) Date of filing: 31.07.2008
(51) Int. Cl.: B62B 3/02

(54) **SHOPPING TROLLEY**

(30) Priority: 09.08.2007 ES 200701753 U
(71) Applicant: Jaime Garcia Moll, S.L., 03700 Denia (ES)
(72) Inventor: Jaime Garcia Moll, S.L., 03700 Denia (ES)
(74) Representative: Sanz-Bermell Martinez, Alejandro
(86) International application number: PCT/ES2008/070153
(87) International publication number: WO 2009/024637

(57) **Abstract**

A shopping trolley provided with wheels on two axles, a front axle and a rear axle, said trolley being foldable, said trolley including a set of rear wheels pivotably connected to the main chassis (2) which forms the structure of said trolley, the back or back wheel axle (14) pivotably connected to the chassis (2) which forms the shopping trolley, and also comprising at least one bearer part or structure (6) for each of the front wheels (8), said structure being pivotably connected to the chassis (2) adjacent to the lower end of said chassis (2), and in the lower corner closest to said chassis (2) of the part or structure (6), the axle (11) of said pivotable connection being horizontal, in such a way that in, the folded position, namely, in the storage or transport position, said structure (6) forms a longitudinal extension of said frame (2).

## Description

The subject of this invention is a light shopping trolley, of the sort normally in household use for doing the daily or weekly shopping, which has two pairs of wheels, one at the front and one at the rear. Each pair of wheels is linked to an axle, and the two pairs of wheels can be folded away to minimise the space required when put away at the house, and also when transported and stored, thus cutting down the costs involved considerably.

Shopping trolleys have been used since long before the existence of the plastic bags which are customarily supplied with purchases of food. Shopping, either supplied in bags, packets or boxes etc. can be carried by hand up to a limit in which its transport becomes extremely uncomfortable, so as to make such transport impossible beyond a certain limit.

For this reason, sacks able to contain a few dozen litres supplied with suitable means for transport have gradually been developed over time.

These sacks were initially provided with handles. Later on the base of such sacks also included pulling wheels. In recent times trolleys have been formed of a rigid, sometimes foldable, structure carrying the sack in which the different packages or bags are inserted for transport.

Some of these structures have two wheels, four wheels, and sometimes six wheels, the latter sort being suitable for going up stairs, in such a way that three wheels on placed in a star pattern on each side of the trolley, so that two rest on the floor, but when an obstacle such as the riser of a stair is reached, the whole assembly turns, lifting one of the wheels until it reaches the tread of the following step. These trolleys move in a similar way to the two-wheeled trolleys described below.

In two-wheeled trolleys, one part of the weight is supported by the wheels, but another part has to be supported by the user. When the user is an elderly person and/or someone lacking any great physical strength, pulling the trolley can mean a great effort, since apart from the pulling force required, the weight of the product transported also has to be supported.

However, the most stable sort and for which least effort is needed are four-wheeled trolleys, in which the bag is slightly tilted and which has a pair of wheels set slightly in front of the base plane of the structure, and a pair of wheels which are set back in respect of this, so that when this is pulled the weight does not have to be supported, only making the effort necessary for movement.

### STATE OF THE ART

ES 1060552 U describes a shopping trolley fitted with four wheels, in which a main frame fitted with a handle carrying the front wheels is incorporated, while a second frame carrying the load bag is joined to said first frame. Said articulated frame is extended at the rear and fitted with a pair of wheels. Though this assembly system manages to have a foldable structure while keeping this strong, this is not satisfactory insofar as said articulation does not manage to minimise the maximum thickness of the trolley in the folding position, since both the main frame and the articulated one have two curved zones for proper use.

ES 1058599 U discloses a four-wheeled trolley in which a first pair of wheels is situated on a body articulated to the end of the main frame along with the support structure of the load bag, while a second pair of wheels is able to be articulated on said frame. The structure involves a large number of parts and is complex to assemble and neither does it manage to minimise the thickness of the trolley as the axes of the wheels are not aligned with the plane of the structure in the folding position.

ES 1047678 U describes a four-wheeled trolley in which the main frame has a bend at its lower end, at the end of which the front wheels are placed, while a second pair of wheels are arranged articulated to this. The folding in this case is not fully satisfactory either, through not minimising the thickness.

ES 1046485 U describes a trolley in which an articulated rear structure is arranged bearing a first pair of wheels, while at the front two structures carrying a single wheel each are placed, articulated in respect of a vertical axis, so that when the frame carrying the bag opens, it provides support, after opening the structures carrying the wheels. This solution is not satisfactory because it weakens the front part of the trolley extraordinarily, as it does not have a common axis making the two front wheels rigid.

### BRIEF DESCRIPTION OF THE DRAWINGS

In order to illustrate the explanation to follow, this descriptive report includes four sheets of drawings, representing the essence of this invention in five figures, in which:

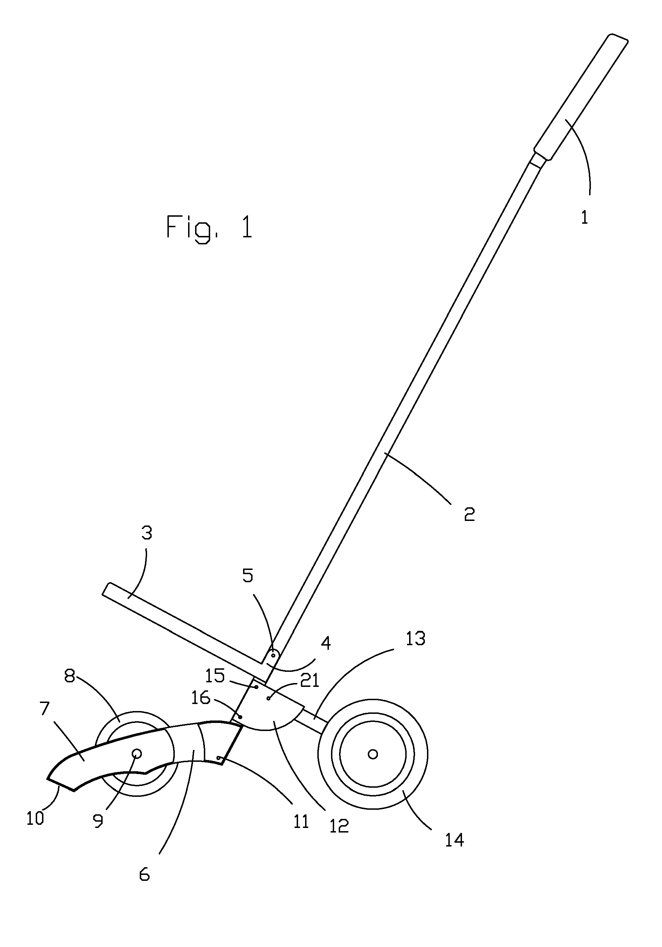

- Figure 1: shows a profile view of the shopping trolley in a first unfolded position;

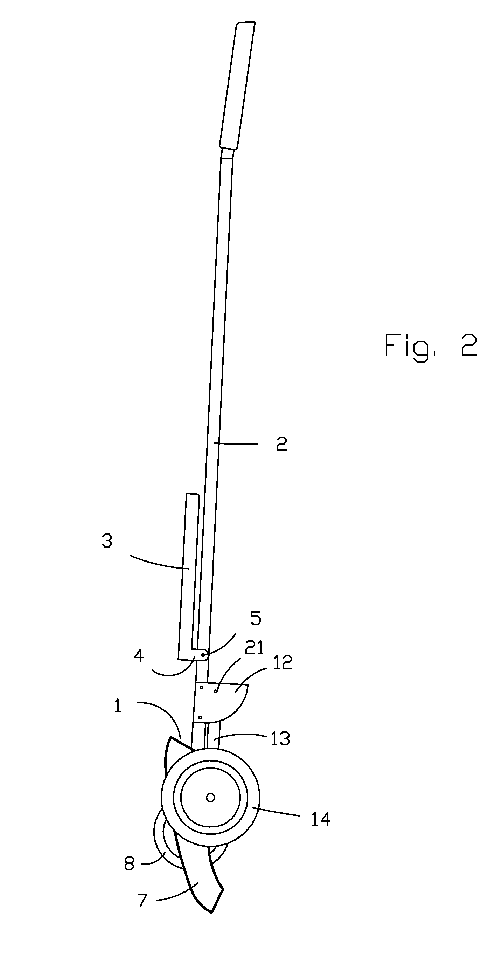

- Figure 2: shows a view also of the shopping trolley of Figure 1 in which both the front and the rear wheels are retracted, in folded position;

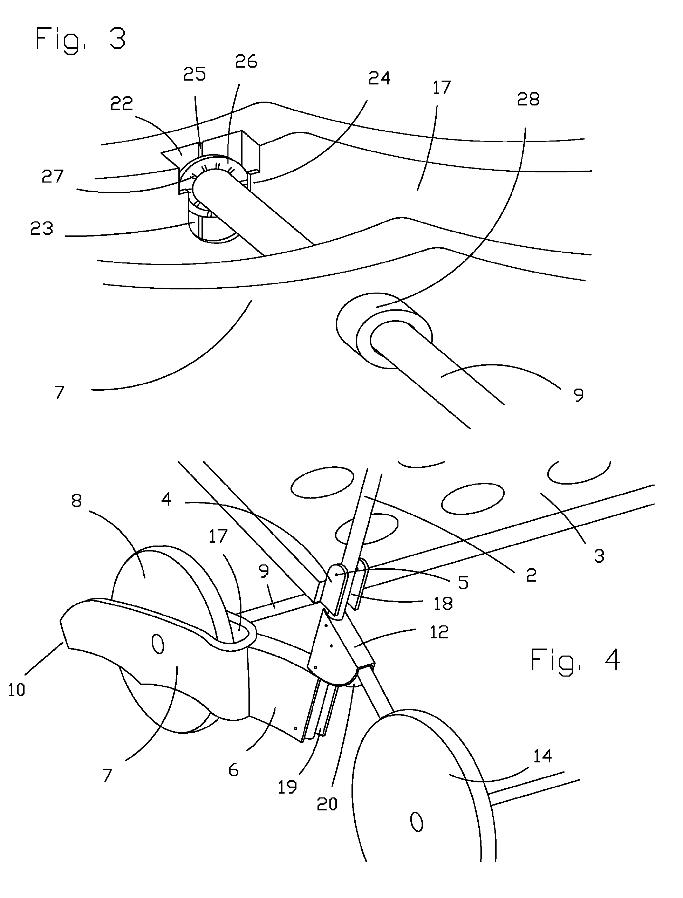

- Figure 3: shows a perspective view detailing the way the axle carrying the front wheels is secured in its corresponding carrying part;
- Figure 4: shows a general perspective view of the mechanisms for articulating the two pairs of wheels, as well as the base for carrying the load bag, and

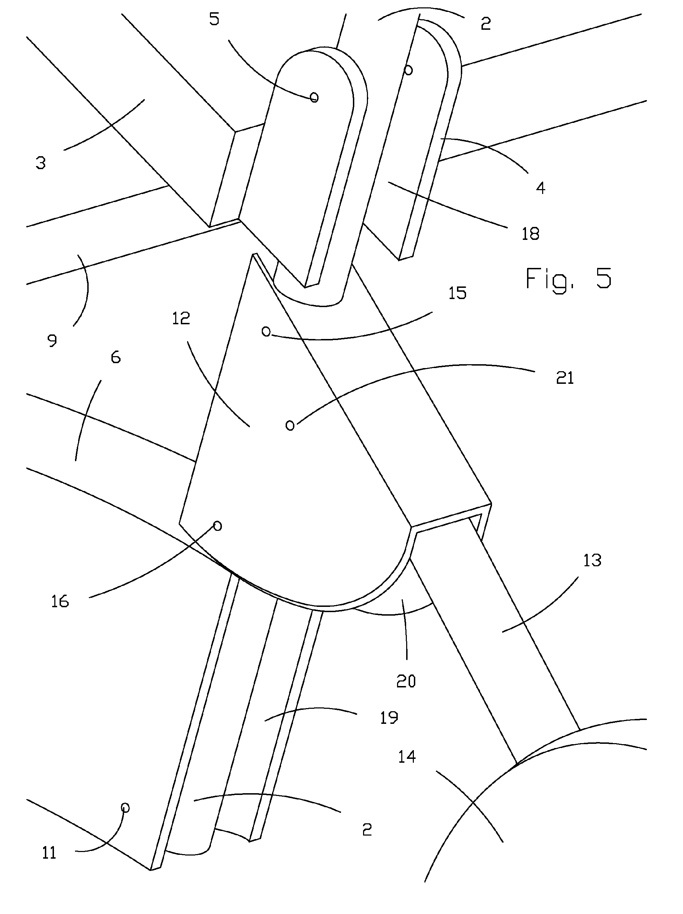

- Figure 5: shows an extended view of a portion of Figure 4.

### DETAILED DESCRIPTION OF THE INVENTION

According to a preferential form of embodiment, as represented as an example, a shopping trolley with two pairs of wheels carrying a sack or load bag in which both pairs of wheels can be folded away is now described.

The trolley according to the invention comprises a frame 2 fitted at the top end with a grip or handle 1 used for pulling said trolley. At the bottom there is a platform 3, articulated in respect of said frame 2 by means of the corresponding articulation axle 5. The join between the articulation axle and the platform is by means of projections 4, which are part of the platform and which separate the articulation from said platform, and preferably consist of pairs of projections 4, consisting in turn of pairs of opposite walls joined at one of their sides to said platform, so that there is a gap 18 between them, in which the frame 2 is located when said platform is in the unfolded position. When the platform 3 is folded by means of articulating this on axle 5, the distance between the plane of the platform and the axle 5 will allow said platform 3 to adopt a position totally parallel to that of the plane of the main frame 2.

The front wheels are normally located on a pair of parts or structures 6 which are placed at the bottom end of the trolley. These parts 6 possibly and preferably form a fork 7 between which there is a gap 17 in which the corresponding front wheel 8 is located, this turning on an axle 9 located in said fork. The axle 9 can be common for the two front wheels on each side of the trolley. The front end 10 of the fork 7 is in turn the support or stop for the trolley on the ground. The parts 6 bearing the wheels 8 are articulated on the frame on the horizontal axis 11, located at the bottom of the structure 2 in the lower angle most proximate to said structure in an unfolded position. At the rear, in the articulation zone 11, said parts 6 comprise at least one gap or housing 19 which is crossed by the frame 2 in the unfolded position. Said gap or housing comprises at least one projection (not shown) which acts as a clamp for securing the frame 2 in said unfolded position. When the parts 6 are forced to turn, overcoming the elasticity of the projections which form the clamp, these adopt a position in which both the axle 9 and the end of said parts 6 are located on the same plane as the frame 2. It is possible (not shown) for the parts 6 and consequently the gap 19 to be extended at both ends, so as to create a second internal channel with its corresponding elastic projections, so that said channel is able to retain the frame 2 in said folded position.

The rear wheels 14 are articulated on an axle 21, by means of arms 13 which join these wheels 14 to said axle 21. The axle 21 for articulating the wheels 14 is located on a part 12, which is joined to the frame 2 by means of its pins or rivets 15 and 16. This part 12 has a channel in its front which grips the frame 2. The rear has an interior space 20, defined between two opposite walls of this part 12. The inside of this part 12 is partially crossed by the arm 13 carrying the wheel 14. The axle 21 to which said arm 13 is articulated is separated from the frame 2 a certain distance so as to adopt an essentially parallel position and practically in contact with this frame 2 when it is in folded position.

The securing of the axle 9 of the wheels 8 comprises a through-hole 28 in the part facing inwards (the side facing the other fork) of the fork 7 through which said axle is inserted. The end of the axle can be made with an annular recess for inserting a washer 26, this washer being fitted with a set of elastic tabs 27. On the other inner side of the fork there is a slot 22, of approximately the same width as the washer 26 and with a little deeper portion 23 of said slot, which has outer walls 24 which reduce the outer section, not the inner one, of said slot. The axle 9 fitted with said washer 26 on it is fitted, thanks to the elasticity of the material forming the fork 7, from the outer part of the slot 22, and is inserted until the washer is confined by the walls 24, with the axle 9 crossing the deep portion 23 of the slot. To prevent any looseness the slot has been designed with a projection 25 which also holds the washer and the axle against the inner side of the walls 24.

This is for application in making shopping trolleys.

## Claims

1. A shopping trolley, fitted with wheels set on two axles, a front one and a rear one. This trolley is foldable, and comprises a set of rear wheels articulated in respect of the main frame (2) forming the structure of said trolley, the rear axle or the rear wheels (14) articulated in respect of the frame (2) which forms the shopping trolley, **characterised by** also comprising:
• At least one part or structure (6) carrying each of the front wheels (8), this structure being articulated in respect of the frame (2) along with the lower end of said frame (2) and at the lower angle most proximate to said frame (2) of the part or structure (6). The axle (11) of said articulation is horizontal, so that in the folded position, i.e. in the storage or transport position, this structure (6) represents a longitudinal extension of said frame (2).

2. A shopping trolley, according to claim 1, **characterised in that** the articulated part or structure (6) comprises a gap (19) which grips the lower end of the frame (2), when this part is unfolded, i.e. in the usage position.

3. A shopping trolley, according to claim 2, **characterised in that** the gap (19) includes a projection on at least one of its outer edges which acts as a securing clamp for part (6) on the frame (2).

4. A shopping trolley, according to claim 2, **characterised in that** each part (6) comprises a fork (7) which defines an inner gap (17) in which one of the front wheels (8), is located, held by an axle (9).

5. A shopping trolley, according to any of claims 2 to 4, **characterised in that** it comprises a stop at the front end of the part (6) or the fork (7) for supporting and/or protecting the wheel (8).

6. A shopping trolley, according to any of claims 1 to 5, **characterised in that** it comprises a common axle for the front wheels (8) of each side of the trolley.

7. A shopping trolley, according to any of claims 1 to 6, **characterised in that** the hollow (19) for holding the part (6) to the frame (2) comprises an extension able to also fix said frame (2) in the unfolded position.

8. A shopping trolley, according to claim 4, **characterised in that** each of the forks (17) includes on one of its sides a through hole (28) through which the axle (9) is inserted during assembly, and in the other side, a slot (22) into which a washer (26) is inserted, fixed to the end of the axle (9).

9. A shopping trolley, according to claim 8, **characterised in that** the slot (22) comprises a portion (23) in its deepest area, which has outer walls (24) which reduce the exterior, not the interior section of said slot.
